# EUROPEAN PATENT APPLICATION

(11) **EP 0 854 622 A2**
(43) Date of publication of application: **22.07.1998**
(21) Application number: 98100857.6
(22) Date of filing: 19.01.1998
(51) Int. Cl.: H04M 1/65, H04L 1/20

(54) **Mobile communication apparatus having recording/reproducing function**

(30) Priority: 21.01.1997 JP 8866/97
(71) Applicant: KABUSHIKI KAISHA TOSHIBA, Kawasaki-shi (JP)
(72) Inventor: Kushige, Naohide, 1-1 Shibaura 1-chome Minato-ku Tokyo 105 (JP)
(74) Representative: Henkel, Feiler, Hänzel

(57) **Abstract**

A radio communication apparatus for transmitting speech data by encoding and compressing data, and multiplexing in a TDMA/TDD method has developed to have automatic answering function wherein the received speech data (compressed data) is stored in a semiconductor memory and reproduced thereafter when the user wishes. The tone quality of the received speech data is detected on the basis of the received control data, and the parameter indicating the tone quality is recorded together with the speech data. The recorded speech data is reproduced in accordance with the parameter. Such parameters as unique word error indicating no synchronization in the speech data and CRC error indicating the occurrence of some error in the received speech data are used as the parameter. When the unique word error occurs, speech data all the bits of which are "0" is used for the speech data. When the CRC error occurs, the decoded speech data may be suppressed. The defect speech data including the error which occurs in the data transmission can be prevented from being reproduced with no compensation.

## Description

The present invention relates to a radio communication apparatus using a radio channel, such as a mobile terminal of a cellular phone system or a mobile terminal of a handy mobile phone system such as a PHS (Personal Handy-phone System).

This application is based on Japanese Patent Application No. 9-008866, filed on January 21, 1997, the content of which is incorporated herein by reference.

In recent years, bad manners of people who use a PHS system or a cellular phone system in a train or public facilities, and the danger in using such an apparatus while driving a car, have been developed into social problems. In order to solve these problems, one proposal is suggested to provide a terminal of these phone system with automatic answering function, similarly to the conventional wired phone. Each terminal of such a phone system is provided with a message memory for recording a received speech message. If the user receives a phone call and will not or cannot answer the caller since the user exists in a train or public facilities, or is driving a car, the terminal is turned into a message recording mode to record the received speech message. By reproducing the recorded message, no nuisance or no car accident will occur.

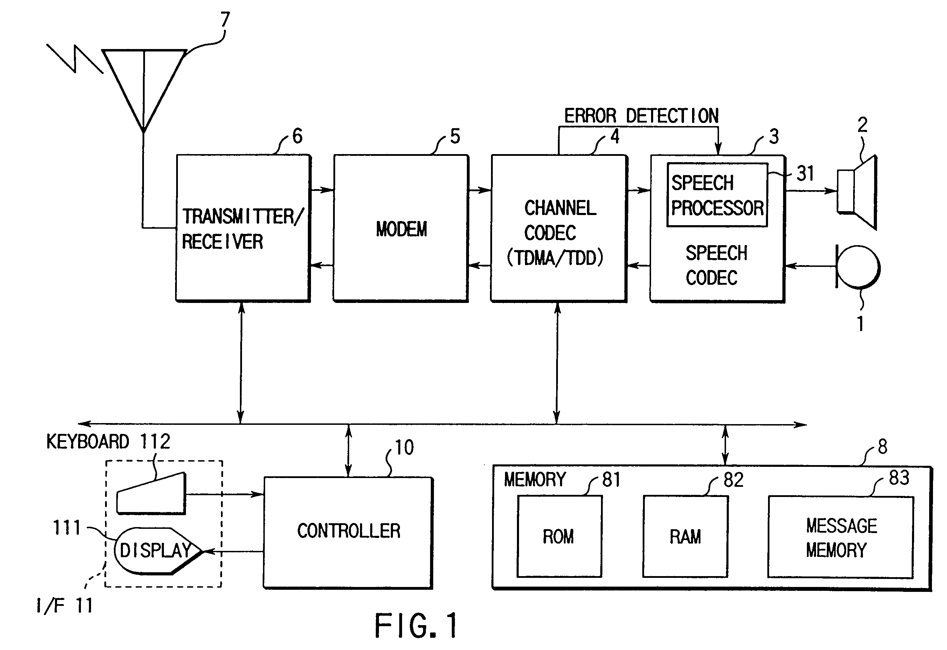

FIG. 1 is the block diagram showing a part of the conventional PHS terminal device having the above-mentioned speech message recording/reproducing function, which is related with the processing of speech data.

The transmitted speech input into the device through a microphone 1 is supplied to a speech codec 3. The speech codec 3 performs an A/D conversion, a PCM encoding, and an ADPCM (Adaptive Differential Pulse Code Modulation) for this transmitted speech. By processing in this manner, the transmitted speech is converted into encoded (compressed) speech data having a bit rate of 160 bits per 5 msec to be input into a channel codec 4.

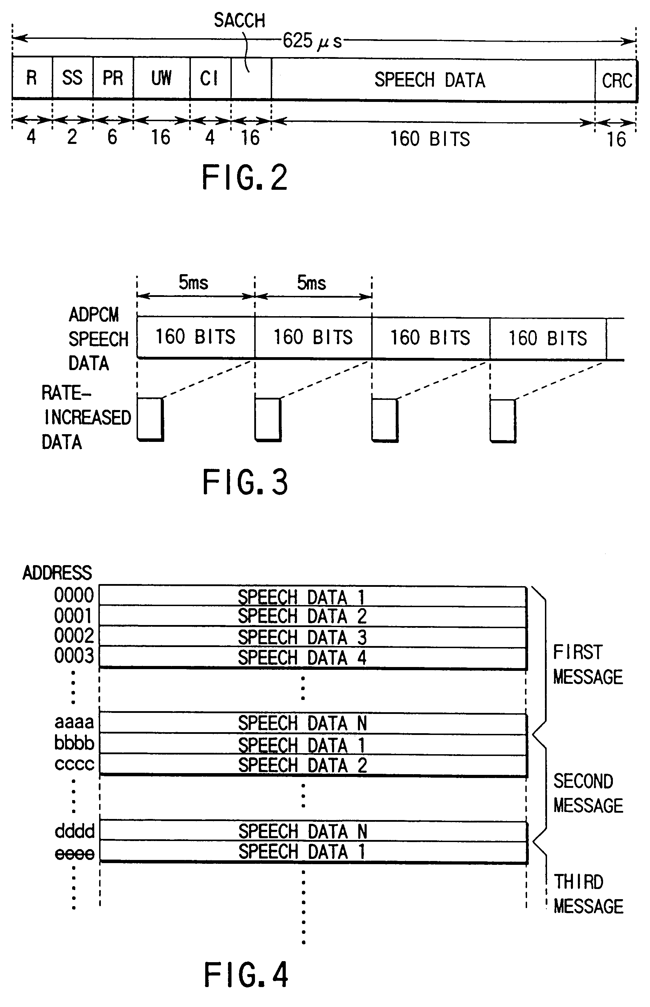

The channel codec 4 adds control data to the encoded speech data to produce one slot of TDMA/TDD (Time Division Multiple Access/Time Division Duplex) data as shown in FIG. 2, then inserts the data into a time slot in a TDMA/TDD frame, which is assigned to the terminal by a controller 10. In FIG. 2, R indicates transient response lamp time bits (4 bits) for smoothing the transient condition as rising/dropping upon transmission/reception of a burst signal from the terminal, SS indicates start symbol bits (2 bits: "1" and/or "0" are defined thereby) for indicating the start of the burst signal, PR indicates preamble bits (6 bits) for reproducing a clock signal from the received signal to assure the bit synchronization between base station and the terminal, UW indicates unique word bits (16 bits) as a pattern for synchronizing each frame of the burst signal, CI (2 bits) indicates bits for identifying the using condition (BCCH, PCH, SCCH, TCH, FACCH or the like) of the assigned slot, SACCH of 16 bits, the encoded speech data has 160 bits, and CRC is cyclic redundancy check bits for error detection of the slot by use the 16 bits generator polynomial (1 + X⁵ + X¹² + X¹⁵) defined in the CCITT standard. In this communication system, one frame of the TDMA/TDD data has a length of 5 msec, and 4 channels of transmission/reception slots (8 slots in total) are multiplexed in one frame. One time slot thus has a length of 625 µ sec (= 5 msec/8). One slot has a code length of 240 bits, and thus the TDMA/TDD data bit rate is 240 bits/625 µ sec = 384 kbps. The bit rate (160 bits/5 msec) of the ADPCM speech data is changed (increased) by the channel codec 4, as shown in FIG. 3. The transmission signal obtained in this manner is input into a MODEM 5.

The MODEM 5 executes the π/4 shift QPSK (Quadrature Phase Shift Keying) modulation of the transmission signal output from the channel codec 4, to input the π/4 shift QPSK modulated signal into a transmitter/receiver 6.

The transmitter/receiver 6 mixes the π/4 shift QPSK modulated signal with a transmission terminal oscillation signal generated by a frequency synthesizer (not shown) to convert the frequency the QPSK modulated signal into a radio channel frequency instructed by the controller 10. The QPSK modulated signal is amplified to a predetermined transmission power level, transmitted to a base station from an antenna 7, then transmitted to the terminal designated to receive the signal.

While, the radio frequency signal transmitted from the other terminal through a base station is received by the antenna 7 and input into the transmitter/receiver 6. The input signal is mixed with a reception terminal oscillation signal generated by the frequency synthesizer to be converted into a reception medium frequency signal.

The reception medium frequency signal output from the transmitter/receiver 6 is input into the MODEM 5 to be demodulated, thereby a reception signal is obtained.

The received signal is input into the channel codec 4, and the reception data located in the time slot designated by the controller 10 is extracted. The reception data is divided into control data and speech data. The bit rate of the speech data is changed (decreased) to 160 bits per 5 msec to obtain an encoded ADPCM speech data. The encoded ADPCM speech data is input into the speech codec 3.

On the basis of the unique word UW and check bit CRC in the control data divided from the reception data, the channel codec 4 determines whether or not the unique word is properly received and any error is exist in the speech data.

The determination results of the reception of the unique word (when the unique word is not properly received, the channel codec 4 determined that a UW error occurs) and the exist of error in the speech data (when any error is exit, the channel codec 4 determined that a CRC error occurs) are also input into the speech codec 3.

The compressed speech data input into the speech codec 3 is decoded (extended) by the ADPCM decoding, and then D/A converted to be reproduced as an analog speech signal. The reproduced analog speech signal output from the speech codec 3 is amplified by a receive amplifier (not shown), then output from the speaker 2.

The speech codec 3 has a speech processor 31 for executing suppressing and the like. When the channel codec 4 informs of the detection of the UW error and/or CRC error in a frame, the speech processor 31 executes processing such as the suppressing of the speech data in the frame to improve the tone quality. It is possible to suppress the received speech after being converted into an analog signal.

A user interface 11 comprises a display 111 formed of a LCD (Liquid Crystal Display) and the like, which indicates the state of the apparatus or the telephone number of the terminal to be connected and a keyboard 112 for inputting a telephone number or setting/registering various functions such as speech message recording/reproducing function.

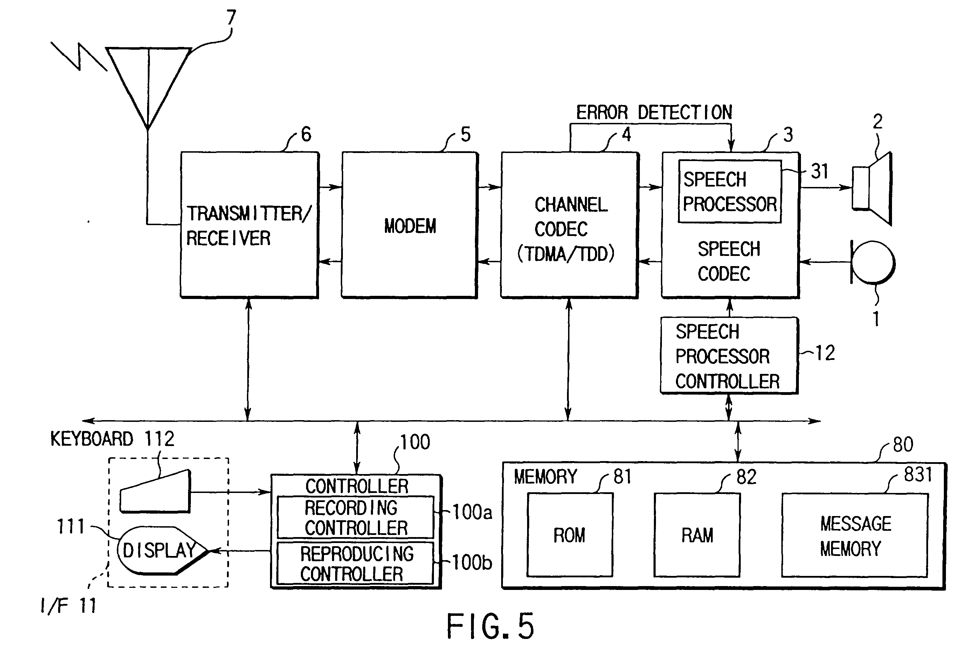

A memory 8 comprises a ROM 81 storing the control program of the controller 10, a RAM 82 used as a working area of the controller 10, and a message memory 83 for recording the speech message of the caller who calls to the terminal in the automatic answering mode. The message memory 83 is constituted of a RAM having a back-up battery or a flash memory, and has a recording format as shown in FIG. 4. In this format, the message memory 83 is divided into areas to assign speech messages their own areas, and each message is divided into a plurality of speech data to be recorded. Each area in the message memory 83 can store 15 seconds of a message. In consideration of the utility efficiency of the memory region, the speech data recorded in the memory 83 is an ADPCM data as shown in FIG. 3. The speech data is recorded to be arranged from data 1 to data N every 160 bits.

The controller 10 has as a main controller a micro computer or the like which executes the control for recording/reproducing the speech data, in addition to the control necessary for the transmission/reception of data or automatic response in the automatic answering mode in accordance with the control program stored in the ROM 81 or the control data stored in the RAM 82.

With the conventional radio communication apparatus constituted as above, the user sets the apparatus in the automatic answering mode by predetermined operation with use of the keyboard 112 in advance to record the speech message of the caller. In the automatic answering mode, the speech data divided from the reception data by the channel codec 4 is stored in the memory 83 by the controller 10.

While, in reproducing the speech data recorded in the message memory 83, the user sets a reproduction mode by predetermined operation with use of the keyboard 112. In the reproduction mode, the controller 10 controls the apparatus such that a plurality of pieces of speech data of each speech message are sequentially read out from the message memory 83, the bit rate of the speech data is decreased by the channel codec 4, and the rate-decreased speech data is ADPCM decoded, D/A converted, and then amplified to be output from the speaker 2.

In the above-mentioned manner, the conventional digital radio communication apparatus realizes the automatic answering mode in which data is recorded and reproduced later. With the conventional digital radio communication apparatus, however, only the speech data (160 bits) in the TDMA/TDD frame data obtained by the channel codec 4 as shown in FIG. 2 is recorded, and the control data such as UW and CRC is not recorded, in consideration of the utility efficiency of the memory region. Accordingly, the speech data which is erroneously transmitted is recorded/reproduced in/from the message memory 83 with no compensation, and the tone quality improvement processing of the speech data, such as the correction of errors by the suppressing or the like by the speech processor, which is executed in the normal reception mode, cannot be executed for the reproduced speech message. The speech message reproduced by the conventional apparatus in such a manner thus includes uncomfortable noise.

Accordingly, it is an object of the present invention to provide a radio communication apparatus with speech recording/reproducing function, which can perform the tone quality improvement of the reproduced speech data, even if coding error occurs in the transmission of the speech data.

The radio communication apparatus with speech recording/reproducing function according to the present invention records parameters indicating the tone quality together with the speech message in order to perform the tone processing at the time of reproducing in accordance with the tone quality parameters, thereby can perform the tone quality improvement of the reproduced speech data, including the correction of errors, similarly to the normal reception, even if coding error occurs in the transmission of the speech data.

The radio communication apparatus with speech recording/reproducing function according to the present invention records the speech message subjected to the tone processing in accordance with the tone quality, thereby can reproduce the speech data the tone quality of which is improved, similarly to that obtained in the normal reception, even if coding error occurs in the transmission of the speech data.

This invention can be more fully understood from the following detailed description when taken in conjunction with the accompanying drawings, in which:
FIG. 1 is a block diagram showing the conventional PHS terminal device;
FIG. 2 is the data format of one frame received by the conventional device shown in FIG. 1;
FIG. 3 shows the conversion of the bit rate of the speech data by the channel codec shown in FIG. 1;
FIG. 4 shows a recording format of the memory shown in FIG. 1;
FIG. 5 is a block diagram showing the PHS terminal device according to a first embodiment of the present invention;
FIG. 6 shows a recording format of the memory of the device according to the first embodiment of the present invention;
FIG. 7 is a flow chart representing the recording operation according to the first embodiment of the present invention;
FIG. 8 is a flow chart representing the reproducing operation according to the first embodiment of the present invention;
FIG. 9 shows a waveform for explaining an operation of the speech processor according to the first embodiment of the present invention; and
FIG. 10 is a modification of a recording format of the memory of the apparatus according to the first embodiment of the present invention.

A preferred embodiment of a radio communication apparatus according to the present invention will now be described with reference to the accompanying drawings.

FIG. 5 is a block diagram showing the constitution of the PHS terminal device according to the first embodiment of the present invention. The same reference numerals are used in FIG. 5 to designate the same elements shown in FIG. 1 and the detailed description thereof is omitted here. The other elements not provided to the conventional apparatus will be described below.

Similarly to the conventional apparatus shown in FIG. 1, the radio communication apparatus shown in FIG. 5 comprises a microphone 1, a speaker 2, a speech codec 3, a channel codec 4, a MODEM 5, a transmitter/receiver 6, and antenna 7. In the first embodiment, the elements not provided to the conventional apparatus, i.e., a memory 80 and a controller 100 are provided to this apparatus of the present invention, instead of the memory 8 and the controller 10. In addition thereto, a speech processor controller 12 is provided to the apparatus.

The memory 80 comprises a ROM 81 for storing the control program of the controller 100, a RAM 82 used as a working area of the controller 100, and a message memory 831 for storing the speech messages from the person who calls to the terminal and the user. The speech message of the user is a response message for informing someone who calls the terminal that the user cannot response and the terminal is set in an automatic answering mode (for example, "I'm not available now. Please leave a message after a beep"). The message memory 83 may also store the conversation in the normal calling.

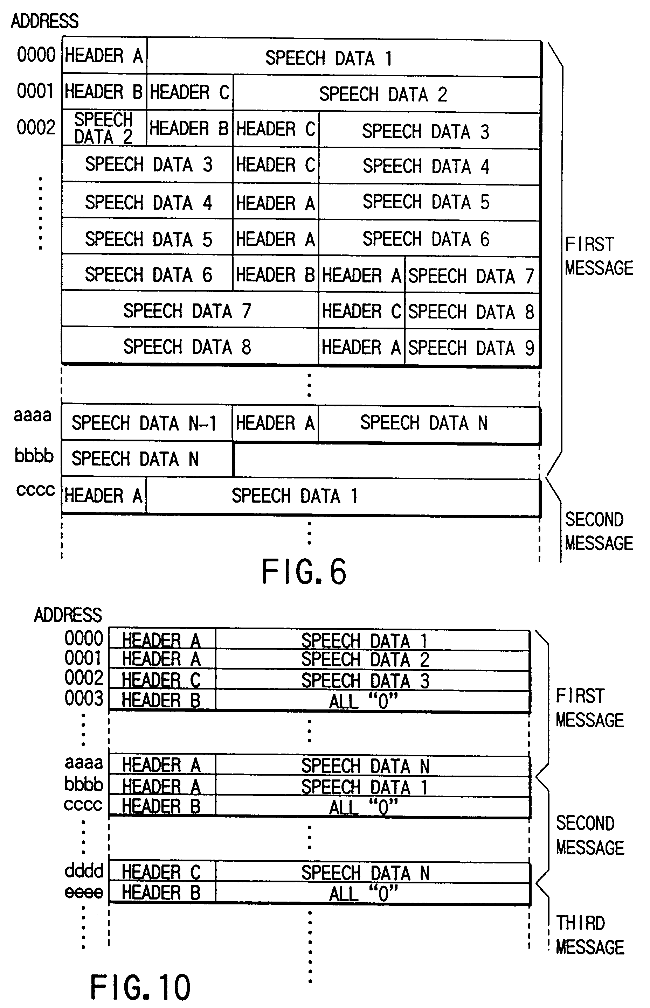

The message memory 831 is constituted of a RAM having back-up battery or a or a flash memory. As one speech message, the message memory 831 stores a plurality sets of the speech data (ADPCM data in every frame) of the person who calls the terminal and the channel quality information (headers A, B, C as described later, or footers) corresponding to the speech data, as shown in FIG. 6. Similarly to the conventional apparatus, each memory area assigned to one speech message can store 15 seconds of a message. FIG. 6 does not show the memory areas assigned to automatic response and conversation in the normal reception mode.

In addition to the similar control function to that of the conventional controller 10, the controller 100 has record controller 100a and reproducing controller 100b.

The record controller 100a obtains a header representing the tone quality of the frame on the basis of the detection results of UW error and CRC error. The detection results are derived from the control data corresponding to each speech data in each frame, which is separated from the speech data by the channel codec 4. Then, the speech data and the corresponding header are coupled with each other and recorded as frame data in the message memory 831, as described above. The frame data of 15 sec is recorded as one piece of message data.

The tone quality of the frame is classified into three ranks (headers A, B, and C). When neither of the UW error and CRC error occurs (that is, the speech is normally received), the header A is recorded with the speech data. When the UW error occurs, the header B is recorded in the message memory 831. The occurrence of the UW error means that the speech data was not properly received, and thus the received speech data is not recorded (only the header B is recorded) in this case. The header C is recorded with the speech data when only the CRC error occurs with no UW error.

The reproducing controller 100b reads out the recorded speech message in unit of frame in response to the request of reproduction of the speech message by the user. The reproducing controller 100b supplies the speech data included in the read frame data to the speech codec 3 via the channel codec 4. While, the tone quality header in the read frame data is used by the reproducing controller 100b for controlling the speech processor controller 12 or controlling the reading of the data from the message memory 831.

The speech processor controller 12 controls the operation of the speech processor 31 in the speech codec 3 on the basis of the control by the reproducing controller 100b in the controller 100.

The recording/reproducing operation of the speech message according to the first embodiment will be described below.

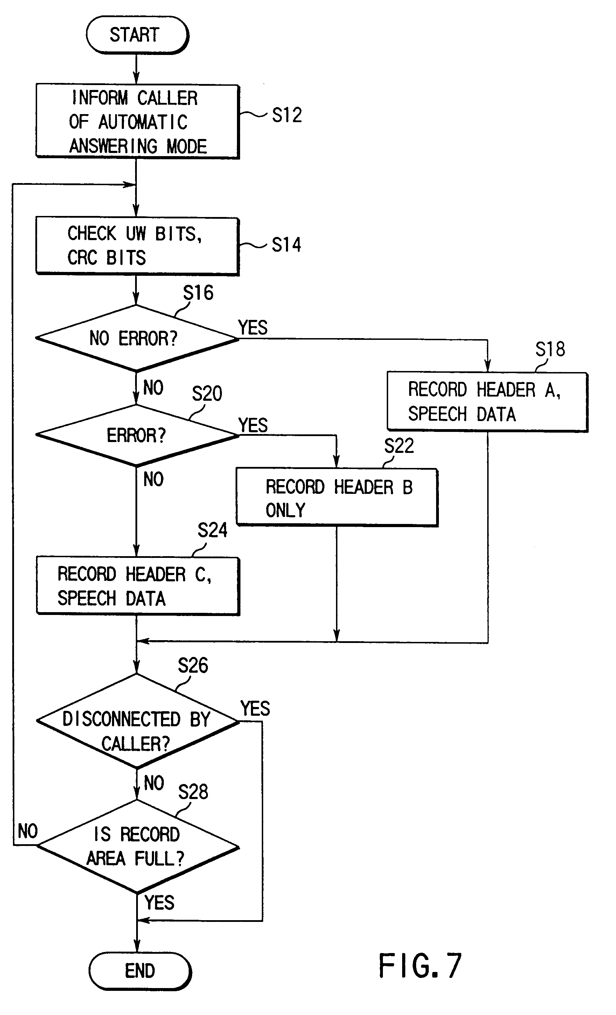

First, the operation of the radio communication apparatus set in an automatic answering mode will be described with reference to FIG. 7.

After a predetermined period of time has passed from the reception of the call, the controller 100 automatically reproduces the response message recorded in the message memory 831 upon the reception of the call in step S12 to inform the caller who called the terminal the absence/unavailability of the called person and suggest leaving the message.

Upon the reception of the call, the channel codec 4 detects in step S14 whether or not the UW and/or CRC error occurs in the received data (frame data), the detection result is informed to the controller 100.

In step S16, the record controller 100a determines whether or not any error occurs in the received data.

When no error occurs in the received data, step S18 is performed to add the header A to the received data and record as frame data in the message memory 831.

When any error occurs in the received data, the record controller 100a determines whether or not the UW error occurs in step S20. When the UW error occurs, the unique word in the received speech data is not properly received, and the received speech data is of no use. In this case, step S22 is performed to record only the header B as frame data in the message memory 831 (see address "0001" in FIG. 6).

When no UW error occurs in the received speech data, the CRC error occurs. In this time, step S24 is performed wherein the record controller 100a adds the header C to the received speech data to store as frame data in the message memory 831.

After the steps S18, S22, S24, it is determined in step S26 whether or not the caller still remains in the calling state, that is, the caller disconnects the channel. When the channel is disconnected, this operation has finished. When the caller still remains in the calling state, it is determined in step S28 whether or not the message memory has any excess memory region (i.e., whether or not the message from the caller has a length of 15 sec). When the message memory has an excess memory region to store any data, the operation backs to step S14 to record the next frame. When 15 sec of the data is stored in the memory, the operation has finished.

As described above, according to the present embodiment, when the received TDMA/TDD frame data is recorded in the memory, speech data and control data are separated from each other. From the control data (80 bits), the information (2 bits representing presence/absence of the UW and/or CRC errors) indicating the tone quality of the received frame is derived as a header, and stored in the memory with the speech data. By recording the speech data in this manner, the information indicating the tone quality of the speech data can be stored with high utility efficiency of the memory region. When the UW error occurs in the data, the received speech data is of no use since the data is not properly synchronized. In this time, only the header B indicating that the data include the error is stored in the memory with no received data which includes the error, and thus the memory region can be used with high utility. By leaving the frame not recorded in this manner, the number of the messages can be increased.

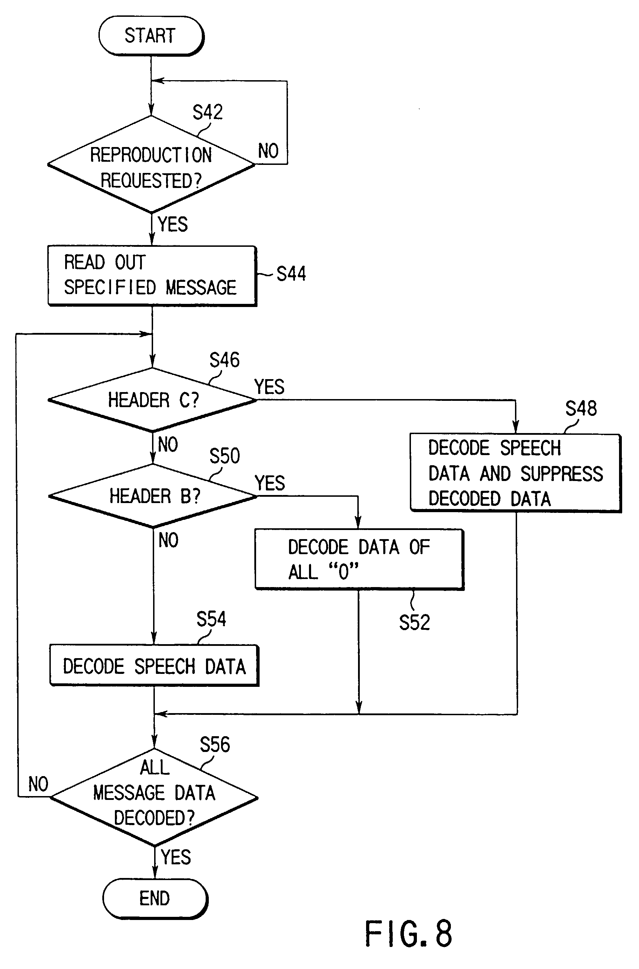

Next, the reproduction of the message as recorded in the above-mentioned manner will be described with reference to the flow-chart shown in FIG. 8.

The apparatus is monitoring the reproduction request from the user. When the user requests to reproduce the message (step S42), step S44 will be performed next.

In the step S44, the reproducing controller 100b reads the message data which the user designates from the message memory 831 in response to the reproduction request. Each frame data in the message data is subjected to the processing based on the header added thereto. In the reproduction operation, the messages may be automatically reproduced in order of reproduction without the designation by the user.

In step S46, it is determined whether or not the header added to the frame data is the header C. When the header is the header C, the operation is forwarded to step S48 in which the speech data to which the header is added is input into the speech codec 3 through the channel codec 4 to convert the speech data is converted into PCM data by the speech codec 3. Then, the PCM signal in the speech data is suppressed by controlling the speech processor controller 12 to operate the speech processor 31. The suppressing is performed to decrease the gain of the signal. In this case, the gain is decreased by 6 dB.

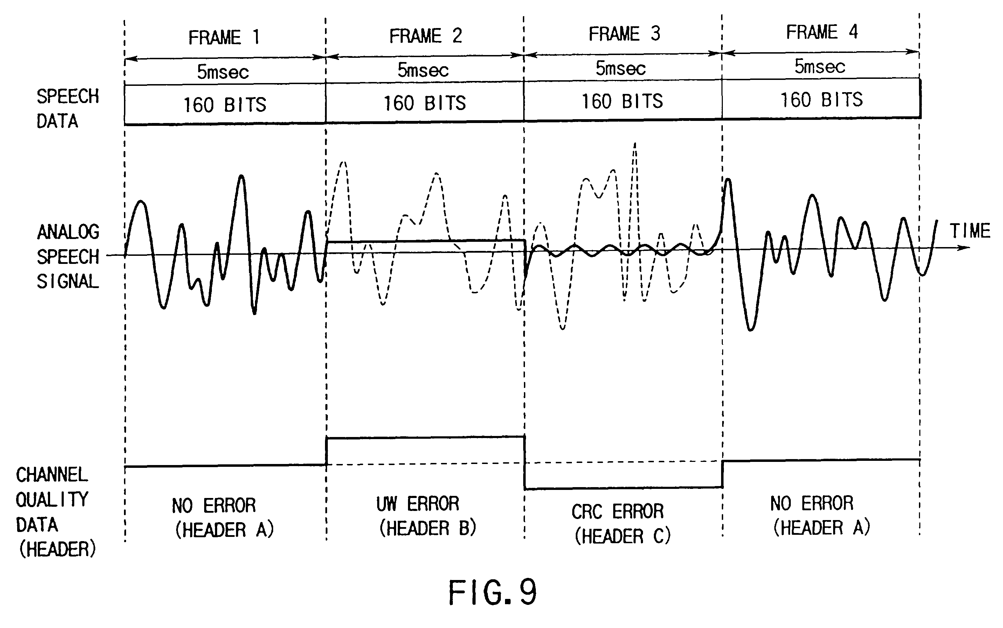

FIG. 9 shows a waveform for explaining the reproduction operation of the recorded message. The frame "3" in FIG. 9 is the frame to which the header C is added. The reproduction analog signal before suppressing is indicated by a broken line. In comparing with the non-suppressed signal and the suppressed signal indicated by a solid line in the area assigned to the frame "3", the suppressed signal is found to be lower than the non-suppressed signal. By suppressing the signal in this manner, a speech message of a very small level is heard in this frame, and the noise which is supposed to be generated during the normal reproduction can be suppressed.

On the other hand, when it is determined in the step S46 that the header is the other than the header C, it is determined in step S50 that the header is the header B. When the header is the header B, step S52 is performed next. In this case, the speech data in the frame to be reproduced is not recorded, and thus the data having 160 bits in which all the bits are "0" is input as the speech data of this frame into the speech codec 3 through the channel codec 4 to be decoded.

The frame "2" shown in FIG. 9 has the header B. When the speech data in the frame "2", in which all the bits are "0", is reproduced as described above, an analog speech signal having a substantially constant level can be obtained as shown in FIG. 9 and the speech message is hardly heard in this frame.

On the other hand, when it is determined in the step S50 that the header is the header A, the frame is decoded in the normal manner.

The frames "1" and "4" shown in FIG. 9 have the header A.

According to the present embodiment, the information indicating the tone quality of the frame is recorded in the memory with the speech data, and thus the speech data to be reproduced can be subjected to the tone quality improvement processing such as the suppressing, similarly to the normally received speech data. Further, with respect to the frame to which the header representing the UW error added, the data in which all the bits are "0" is regarded as the speech data, thereby the speech data can be prevented from being lacked. In this manner, the unnatural sound due to the lack of the speech data can be solved, and unplease noise can be prevented from being generated.

The message memory 831 can also store the speech message of the user (a response message such as "I'm not available now. Please leave a message after a beep"). In this case, however, the message is directly input into the apparatus through the microphone 1, and thus no header indicating the tone quality of the speech data is necessary and not recorded. The response message may be provided in the ROM 81 as a fixed message when the apparatus is put into the market instead of the user's own message. In this case, the message memory 831 can be used only for storing the callers' message.

The message memory 831 can be used not only for storing the callers' message, but also recording the conversation in the normal communication. In this case, the message from the caller is recorded in the processing shown in FIG. 7. The user's response message is always recorded to include the header A. By recording the message in this manner, the user's response message can be reproduced in the same manner as shown in FIG. 8.

It is understood that the present invention is not limited to the embodiment described above, and that various changes and modifications may be effected therein by one skilled in the art without departing from the scope or spirit of the invention, as shown below.
(1) In the above-mentioned embodiment, when the CRC error occurs, the signal level of the reproduction analog signal is uniformly decreased to a predetermined level (6 dB) by performing the suppressing. Instead of the suppressing, the filtering may be performed to cut the high frequency components of the reproduced analog speech signal to a specified cutoff frequency, thereby jarring noise in the speech signal can be cut.
(2) In the above-mentioned embodiment, the frame in which the CRC error occurs is not recorded, and in reproducing, the data in which all the bits are "0" is reproduced instead of the frame in which the CRC error occurs. As another method, the speech data having the frame in which the CRC error occurs may be decoded with use of the frame one before the frame in which the CRC error occurs, i.e., by performing the preceding substitution. With use of the data in which all the bits are "0" is used as shown in the embodiment shown above, the speech data is more or less disconnected. On the other hand, with use of the preceding frame, more natural speech data can be reproduced than that of the speech data including the data in which all the bits are "0".
(3) In the above-mentioned embodiment, the frame in which UW data occurs is not recorded. In this case, the data is not recorded in the memory and thus the memory can be saved, but the read control is so complicated. For simplifying the read control process, the speech data in which all the bits are "0" may be also provided after the header B as shown in FIG. 10. In this case, similarly to the modification described in (2), the frame one before the frame in which the error occurs may be recorded again.
(4) In the above-mentioned embodiment, a header of 2 bits indicating two types of tone quality parameters: UW error and CRC error are recorded to be added to speech data, but a header of 1 bit which does not discriminate these errors but indicates only the presence/absence of the errors may be added to the speech data be used. When some error occur in this case, the data can be performed without any problem without recording the speech data and by inserting the data all bits of which are "0" or performing the preceding substitution.
(5) In the above-mentioned embodiment, the TDMA method is employed as an access method. The access method is, however, not limited to this method. The FDMA (Frequency Division Multiple Access) or the CDMA (Code Division Multiple Access) may be employed as an access method. As an duplex method, the TDD method is employed in the embodiment, but the FDD (Frequency Division Duplex) method may be also employed. Similarly, the ADPCM method and the π/4 shift QPSK method are employed in the embodiment as the coding method and the modulation method, respectively, but the other methods can be also employed. Further, the embodiment is described about the PHS terminal, but the mobile telephone using an analog circuit may be applied with the present invention.
(6) In the above-mentioned embodiment, the tone improvement processing is executed in accordance with the header added to the speech data in the reproduction of data. The tone improvement processing may be also executed for the PCM data by the speech codec 3 in accordance with the tone quality at the time of reception (before recording). The data with the improved tone quality is input into the channel codec 4 to execute the ADPCM again, and then stored in the memory 831 after the bit rate is increased. In this case, in the step S18 in FIG. 7 wherein no error occurs in the data, the PCM data subjected to the ADPCM is recorded without adding any header. While, in the step S22 wherein the UW error occurs in the data, the PCM data all the bits of which are "0" or the PCM data of the preceding frame is converted into the ADPCM data to be recorded. In the step S24 wherein the error other than the UW error occurs in the data, the PCM data is recorded after being suppressed. The ADPCM data recorded in such a manner can be reproduced merely by being converted into the PCM data and then subjected to the D/A conversion.

As described above, according to the present invention, when the user cannot or does not wish to respond to the call, the speech data from the caller is recorded with the corresponding tone quality data indicating the tone quality of the speech data. The speech data recorded in such a manner is reproduced after a predetermined tone quality improvement processing based on the tone quality data stored to correspond to the speech data. Such data as unique word error indicating improper reception of the unique word included in the received speech to synchronize the speech data and/or the error detection result based on the check bit for detecting the error is used as the tone quality data. As a predetermined tone quality improvement processing, attenuation, filtering within a predetermined band width, replacing the speech data with predetermined speech data, or replacing the speech data with the preceding speech data is employed. When the tone quality data indicates the occurrence of the unique word error, the recording of the corresponding speech data is omitted from the process, and predetermined data is input to fill up the omitted speech data. Therefore, according to the present invention, the speech data received when the tone quality of the circuit is low can be reproduced with minimum deterioration of the tone quality of the reproduced message by the tone improvement processing for removing the noise due to the error which occurs during the transmission of the speech data. The present invention can also increase the utility of the memory region in which the message is stored.

Further, according to the present invention, when the user cannot or does not wish to respond to the call, the speech data from the caller is subjected to a predetermined tone quality improvement processing on the basis of the tone quality data stored to correspond to the speech data, and then compressed to be recorded. Therefore, according to the present invention, the speech data received when the tone quality is low can be reproduced with minimum deterioration of the tone quality of the reproduced message since the speech data has been subjected to the tone improvement processing for removing the noise due to the error which occurs during the transmission of the speech data.

## Claims

1. A radio communication apparatus characterized by comprising:
means (4) for detecting quality of a received speech data included in a received signal;
means (100a) for recording the received speech data and parameter data indicating the quality detected by said detecting means; and
means (100b) for processing the recorded received speech data based on the recorded parameter data and generating the processed speech data.

2. A radio communication apparatus according to claim 1, characterized in that said processing means (100b) attenuates the recorded received speech data when the parameter data indicates that the detected quality of the received speech data is lower than a predetermined value.

3. A radio communication apparatus according to claim 1, characterized in that said processing means (100b) filters out a predetermined bandwidth of the recorded received speech data when the parameter data indicates that the detected quality of the received speech data is lower than a predetermined value.

4. A radio communication apparatus according to claim 1, characterized in that said detecting means (4) detects quality of the received speech data with predetermined time intervals, and said recording means records the parameter data and the received speech data which is received within the predetermined time interval.

5. A radio communication apparatus according to claim 1, characterized in that said processing means (100b) substitutes the recorded received speech data with predetermined data when the parameter data indicates that the detected quality of the received speech data is lower than a predetermined value.

6. A radio communication apparatus according to claim 5, characterized in that all bits of said predetermined data are "0".

7. A radio communication apparatus according to claim 5, characterized in that said recording means (100a) does not record the received speech data when the parameter data indicates that the tone quality of the received speech data is lower than a predetermined value.

8. A radio communication apparatus according to claim 4, characterized in that said processing means (100b) substitutes the recorded received speech data with a preceding received data when the parameter data indicates that the detected quality of the received speech data is lower than a predetermined value.

9. A radio communication apparatus according to claim 8, characterized in that said recording means (100a) does not record the received speech data when the parameter data indicates that the detected quality of the received speech data is lower than a predetermined value.

10. A radio communication apparatus according to claim 1, characterized in that said detection means (4) detects whether an unique word included in the received speech data for synchronizing the received speech data includes an error, the result of detection being the parameter data.

11. A radio communication apparatus according to claim 1, characterized in that said detection means (4) detects whether a check bit included in the received speech data includes an error, the result of detection being the parameter data.

12. A radio communication apparatus according to claim 11, characterized in that, when the error is included in the unique word, said recording means does not record the received speech data.

13. A radio communication apparatus according to claim 11, characterized in that, when the error is included in the unique word, said processing means substitutes the recorded received speech data with digital data all bits of which are "0".

14. A radio communication apparatus for receiving speech data and control data accompanied with the speech data, characterized by comprising:
means (4) for dividing a received signal into the speech data and the control data;
parameter obtaining means (4) for detecting quality of the speech data during transmission based on the control data and forming an identification parameter indicating the detected quality, the identification parameter having a smaller amount of bit than that of the control data;
recording (100a) means for recording the speech data and the identification parameter; and
processing means (100b) for reproducing the speech data and the identification parameter and processing the reproduced speech data in accordance with the identification parameter.

15. A radio communication apparatus according to claim 14, characterized in that said processing means (100b) attenuates the reproduced speech data when the identification parameter indicates that the detected quality is lower than a predetermined value.

16. A radio communication apparatus according to claim 14, characterized in that said processing means (100b) filters out a predetermined bandwidth of the reproduced speech data when the identification parameter indicates that the detected quality is lower than a predetermined value.

17. A radio communication apparatus according to claim 16, characterized in that said processing means (100b) filters out a high frequency bandwidth of the reproduced speech data.

18. A radio communication apparatus according to claim 14, characterized in that said processing means (100b) substitutes the reproduced speech data with predetermined data when the identification parameter indicates that the detected quality is lower than a predetermined value.

19. A radio communication apparatus according to claim 18, characterized in that said recording means (100a) does not record the speech data when the identification parameter indicates that the tone quality is lower than a predetermined value.

20. A radio communication apparatus according to claim 18, characterized in that all bits of said predetermined data are "0".

21. A radio communication apparatus according to claim 18, characterized in that said predetermined data is preceding speech data.

22. A terminal device of a multiple-access radio communication system, the device characterized by comprising:
a memory (831) for recording a speech data;
a speech codec (3) having a speech data processor (12) for processing the speech data;
a channel codec (4) for extracting an encoded speech data of its own channel in a received signal;
means (4) for detecting a synchronization error and a bit error based on a control bit included in the encoded speech data;
means (100a) for recording the result of error detection by said detection means and the encoded speech data into the memory (831); and
processing means (100b) for reading from said memory (831) the encoded speech data and the detection result and supplying the encoded speech data to the speech codec (3),
wherein said speech data processor (12) processes the encoded speech data in accordance with the detection result.

23. A terminal device according to claim 22, characterized in that said speech data processor (12) suppresses the encoded speech data.

24. A terminal device according to claim 22, characterized in that said speech data processor (12) substitutes the encoded speech data with data all bits of which are "0".

25. A radio communication apparatus for receiving information data to be transmitted and control data accompanied with the information data, the apparatus characterized by comprising:
means (4) for dividing a reception signal into the information data and the control data;
identification parameter obtaining means (4) for detecting quality of the information data during transmission on the basis of the control data and generating an identification parameter indicating a result of the detection;
means (100a) for storing the information data and the identification parameter; and
processing means (100b) for reading from the storing means the information data and the identification parameter, and reproducing the information data after being processed in accordance with the identification parameter.
